# EUROPÄISCHE PATENTSCHRIFT

(11) **EP 2 229 518 B1**
(45) Veröffentlichungstag und Bekanntmachung des Hinweises auf die Patenterteilung: **14.10.2015**
(21) Anmeldenummer: 08857694.7
(22) Anmeldetag: 03.11.2008
(51) Int. Cl.: F02D 9/10, F16K 1/22

(54) **KLAPPENSTUTZEN**
THROTTLE VALVE
PORTE-CLAPET

(30) Priorität: 06.12.2007 DE 102007058541
(43) Veröffentlichungstag der Anmeldung: 22.09.2010
(73) Patentinhaber: Robert Bosch GmbH, 70442 Stuttgart (DE)
(72) Erfinder: EMMERT, Stefan, 90599 Dietenhofen (DE); ROESSNER, Thomas, 90482 Nuernberg (DE); PREISSNER, Christian, 90439 Nuernberg (DE); MAYER, Joerg, 71522 Backnang (DE)
(86) Internationale Anmeldenummer: PCT/EP2008/064856
(87) Internationale Veröffentlichungsnummer: WO 2009/071403

(56) Entgegenhaltungen:
- EP-A- 1 128 040
- EP-A- 1 394 453
- DE-A1- 19 820 080
- DE-A1- 19 841 181
- JP-A- 2005 337 198
- JP-A- 2007 032 285

## Beschreibung

### Stand der Technik

Bei Kraftfahrzeugen mit einer Brennkraftmaschine gibt es üblicherweise mindestens einen Klappenstutzen zum Steuern einer Fluidströmung, insbesondere zum Steuern einer der Brennkraftmaschine zugeführten Zuluftströmung. Mit Klappenstutzen kann die Leistung der Brennkraftmaschine gesteuert werden.

In dem Klappenstutzen ist eine Klappenwelle schwenkbar gelagert. An der Klappenwelle ist eine Klappe befestigt. Bei dem in der DE 42 20 022 A1 gezeigten Klappenstutzen hat die Klappenwelle einen Schlitz, in der die Klappe mit Hilfe von Schrauben befestigt ist. In der DE 42 20 022 A1 werden Maßnahmen vorgeschlagen, um die durch den Schlitz in der Klappenwelle hervorgerufene Leckage so weit wie möglich zu verringern.

Bei Klappenstutzen ist es wichtig, dass die Klappe innerhalb des Gaskanals sehr präzise positioniert ist. Wegen diesem Problem zeigt die US 4,682,758 eine Ausführung, bei der mit Hilfe von Schrauben die Klappe in eine Richtung quer zur Klappenwelle justiert werden kann.

In der EP 0 879 136 B1 wird ein Klappenstutzen vorgeschlagen, bei dem es an der Klappenwelle Vorsprünge hat, mit denen die Klappe mit der Klappenwelle vernietet werden kann.

Die DE 43 43 091 A1 zeigt einen Klappenstutzen, bei dem an eine in einem Klappengehäuse schwenkbar gelagerte Klappenwelle eine Klappe angespritzt wird.

Bei der DE 197 03 296 A1 wird in eine zwischen der Klappenwelle und dem Klappengehäuse vorgesehene Ausnehmung mittels einer Kanüle im flüssigen Zustand ein aushärtbares Dichtmittel eingebracht. Nach dem Aushärten sorgt das Dichtmittel an der Schwenklagerstelle für eine Abdichtung zwischen der Klappenwelle und dem Klappengehäuse.

Bei der DE 32 43 996 C1 wird an der Wandung des Gaskanals des Klappenstutzens eine Polymerbeschichtung angebracht. Die Polymerbeschichtung soll in der Schließstellung der Klappe einer Verringerung der Leckageluft dienen. Durch die Polymerbeschichtung an der Wandung des Gaskanals entsteht eine Unebenheit und damit eine eher unerwünschte Verwirbelung des durch den Gaskanal strömenden Fluids.

Die DE 198 41 181 A1 zeigt einen Klappenstutzen, bei dem in dem Klappengehäuse Querlöcher vorhanden sind, durch die von beiden Seiten Wellenstummel in das Material der Klappe eingeformt werden. Das Einformen der Wellenstummel in das Material der Klappe geschieht vorzugsweise durch Ultraschall. Dieses Verfahren kann nur angewandt werden, wenn die Klappe aus einem Material besteht, bei dem ein Einformen der Wellenstummel möglich ist. Mit dem in der DE 198 41181 A1 gezeigten Verfahren ist eine sehr präzise Positionierung der Klappe relativ zum Gaskanal möglich, aber dieses Verfahren ist ziemlich aufwendig.

Die US 4,243, 203 zeigt einen Klappenstutzen mit einer in einem Klappengehäuse schwenkbar gelagerten Klappenwelle, wobei die Klappenwelle durch einen an die Klappe angeformten Mantel hindurchführt. Die Verdrehsicherung der Klappe geschieht mittels Schrauben.

### Offenbarung der Erfindung

### Vorteile der Erfindung

Der erfindungsgemäße Klappenstutzen bzw. das erfindungsgemäße Verfahren zum Herstellen eines Klappenstutzens hat die Vorteile, dass der Aufwand zum Einstellen der Klappe relativ zu dem Klappengehäuse erheblich reduziert ist, dass in geschlossener Stellung eine besonders kleine Leckage zwischen der Klappe und dem Gaskanal erzielt werden kann und dass eine Leckage zwischen der Klappe und der Klappenwelle gänzlich vermieden wird. Ein weiterer Vorteil ist, dass die exakte Positionierung zwischen der Klappe und der Innenwand des Gaskanals dauerhaft gewährleistet ist. Ein weiterer Vorteil ist die dauerhafte mechanische Verbindung zwischen der Klappe und der Klappenwelle. Für die Klappe und für die Klappenwelle können vorteilhafterweise praktisch alle für Klappen und für Klappenwellen bisher schon verwendeten Materialien weiterhin verwendet werden.

Durch die in den Unteransprüchen aufgeführten Maßnahmen sind vorteilhafte Weiterbildungen und Verbesserungen des Klappenstutzens bzw. des Verfahrens zum Herstellen eines Klappenstutzens möglich.

Der Zwischenraum zwischen der Klappenwelle und dem die Klappenwelle mindestens teilweise umgreifenden Mantel der Klappe bietet den Vorteil, dass ausreichend Füllmaterial eingebracht werden kann und dadurch eine besonders gute dauerhafte Positionierung der Klappe relativ zur Klappenwelle gewährleistet ist. Bei entsprechend dimensioniertem Zwischenraum kann, bevor sich das Füllmaterial verfestigt, die Klappe zwecks Justage auf einfache Weise auch quer zur Klappenwelle ausgerichtet werden.

Die Unrundheit der der Klappenwelle bzw. dem Füllmaterial zugewandten Mantelfläche bzw. die mindestens eine Unregelmäßigkeit an der der Klappenwelle bzw. dem Füllmaterial zugewandten Mantelfläche des die Klappenwelle aufnehmenden Mantels der Klappe bietet den Vorteil einer dauerhaften, sichereren, festen Verbindung. Ein Verdrehen der Klappe relativ zur Klappenwelle wird dauerhaft verhindert. Dieselben Vorteile bietet die Unrundheit der Klappenwelle bzw. die mindestens eine Unregelmäßigkeit an der Klappenwelle im Bereich des Mantels.

Wird das Füllmaterial nach einem Zusammenbauen der Klappe mit der Klappenwelle in den Zwischenraum zwischen die Klappenwelle und die Klappe eingebracht, so bietet dies den Vorteil eines zeitlich sinnvollen Ablauf bei der Herstellung des Klappenstutzens und man kann genau festlegen wann, wie und wo das Füllmaterial appliziert werden soll.

Ist das nach einem Zusammenbau sich verfestigende Füllmaterial bereits vor dem Zusammenbauen an der Klappenwelle und/oder an der Klappe angebracht, so ergibt sich dadurch der Vorteil einer rationellen Herstellung mit wenig Arbeitsschritten.

Der Klappenstutzen mit mindestens einer am Mantel der Klappe vorgesehenen eingedrückten Stelle bietet den Vorteil einer leicht herstellbaren, drehmomentsicheren und dauerhaften Verbindung zwischen der Klappe und der Klappenwelle, mit dem Vorteil dass die Klappe relativ zur Klappenwelle auf einfache Weise präzise und sicher positioniert werden kann. Ein weiterer Vorteil ist, dass kein flüssiges oder pastöses Material appliziert werden muss.

### Kurze Beschreibung der Zeichnungen

Bevorzugt ausgewählte, besonders vorteilhafte Ausführungsbeispiele der Erfindung sind in den Zeichnungen vereinfacht dargestellt und in der nachfolgenden Beschreibung näher erläutert. Es zeigen
- Figur 1: einen Klappenstutzen,
- Figur 2 und 3: eine Klappenwelle mit Klappe,
- Figur 4, 5. 6: Einzelheiten des Klappenstutzens,
- Figur 7: eine abgewandelte Ausführung und
- Figur 8: ein weiteres Ausführungsbeispiel des Klappenstutzens.

### Ausführungsformen der Erfindung

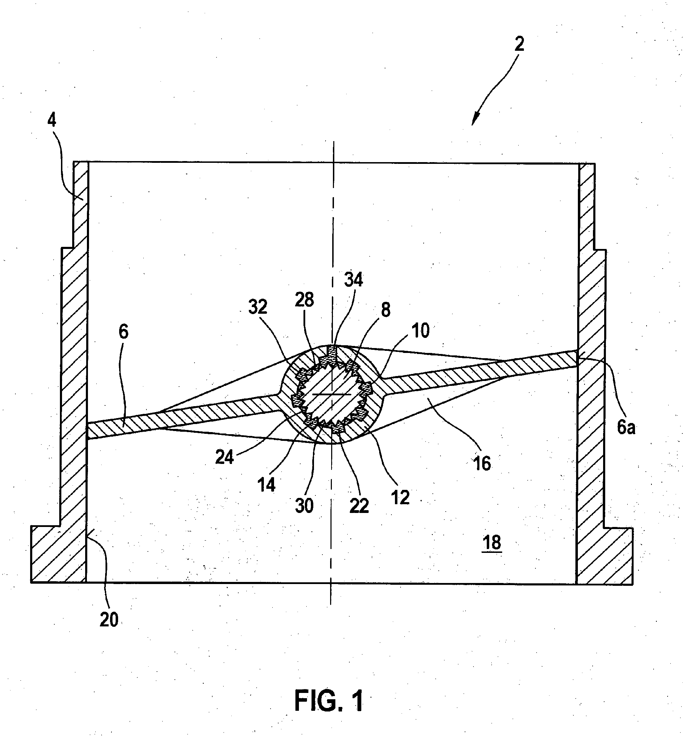

Die **Figur 1** zeigt ein bevorzugt ausgewähltes, besonders vorteilhaftes Ausführungsbeispiel eines Klappenstutzens 2 mit einem Klappengehäuse 4, einer Klappe 6 und einer Klappenwelle 8. Die Klappenwelle 8 ist über zwei nicht dargestellte Lager beidseitig in dem Klappengehäuse 4 schwenkbar gelagert. Die Klappenwelle 8 kann auch nur einseitig über ein nicht dargestelltes Lager in dem Klappengehäuse 4 gelagert sein. Zwischen der Klappe 6 und der Klappenwelle 8 ist ein Füllmaterial 10 bzw. Fixiermaterial 10 vorgesehen. In der Figur 1 sind die Flächen, in denen sich das Füllmaterial 10 bzw. Fixiermaterial 10 bzw. Klebstoff 10 befindet, symbolhaft mit Punkten markiert.

Der Klappenstutzens 2 ist vorgesehen zum Steuern einer Fluidströmung, insbesondere zum Steuern der einer nicht dargestellten Brennkraftmaschine zugeführten Zuluftströmung oder zum Steuern einer Abgasströmung oder zum Steuern der Rückführung eines Teils des Abgases zurück in die Brennkraftmaschine. Mit dem Klappenstutzen 2 kann beispielsweise die Leistung der Brennkraftmaschine gesteuert werden. Nicht selten kommen je Brennkraftmaschine mehrere Klappenstutzen zum Einsatz. Insbesondere dann wenn der Klappenstutzen 2 zum Steuern der Zuluftströmung dient, wird der Klappenstutzen 2 häufig auch als Drosselklappenstutzen oder als Drosselsteuergerät bezeichnet.

Die Klappe 6 hat einen angeformten Mantel 12 in Gestalt einer Verdickung. Der Mantel 12 verläuft vorzugsweise über den gesamten Durchmesser der Klappe 6. Es ist auch möglich, die Verdickung und damit den Mantel 12 nicht über den gesamten Durchmesser der Klappe 6 zu führen. Eine durchgehende Aufnahmeöffnung 14 führt durch den Mantel 12. Der Mantel 12 umgibt die Aufnahmeöffnung 14. An der Klappe 6 kann eine Verstärkungsrippe 16 oder mehrere Verstärkungsrippen 16 vorgesehen sein. Die Klappe 6 hat einen Umfang 6a.

Durch das Klappengehäuse 4 verläuft ein Gaskanal 18. Eine Innenwand 20 des Klappengehäuses 4 umgrenzt den Gaskanal 18.

Die Größe der Klappe 6 ist dem Querschnitt des Gaskanals 18 angepasst. Wenn der Gaskanal 18 beispielsweise einen kreisrunden Querschnitt hat, dann ist die Klappe 6 beispielsweise leicht oval, so dass dann, wenn die Klappe 6 in geschlossener Stellung steht, das heißt, wenn der Umfang 6a ringsum an der Innenwand 20 anliegt, die Klappe 6 leicht schräg steht, wie in der Figur 1 dargestellt.

In der Aufnahmeöffnung 14 der Klappe 6 befindet sich die Klappenwelle 8. Die Klappenwelle 8 ragt zweiseitig oder nur auf einer Seite, je nach Art der Lagerung der Klappe 6, über den Umfang 6a der Klappe 6 hinaus.

Die Klappenwelle 8 hat im Bereich des Mantels 12 einen Außendurchmesser der so dimensioniert ist, dass zwischen der Klappenwelle 8 und dem Mantel 12 ein Zwischenraum 22 existiert. Der Zwischenraum 22, zumindest ein Teil des Zwischenraums 22, vorzugsweise ein überwiegender Teil des Zwischenraums 22, ist mit dem Füllmaterial 10 ausgefüllt. Die Aufnahmeöffnung 14 des Mantels 12 der Klappe 6 hat eine der Klappenwelle 8 bzw. dem Füllmaterial 10 zugewandte Mantelfläche 24. Die Klappenwelle, 8 hat im Bereich innerhalb des Mantels 12 eine dem Mantel 12 bzw. dem Füllmaterial 10 zugewandte Umfangsfläche 28.

Die Umfangsfläche 28 ist im Bereich der Befestigung zwischen der Klappenwelle 8 und der Klappe 6 mit Unregelmäßigkeiten 30 versehen. Die Unregelmäßigkeiten 30 sind beispielsweise an der Umfangsfläche 28 angeordnete Zähne und/oder achsparallel vorgesehene Wellen an der Umfangsfläche 28 und/oder radial verlaufende Löcher in der Klappenwelle 8.

Die Mantelfläche 24 des Mantels 12 der Klappe 6 hat im Bereich der Befestigung zwischen der Klappenwelle 8 und der Klappe 6 Unregelmäßigkeiten 32. Die Unregelmäßigkeiten 32 an der inneren Mantelfläche 24 des Mantels 12 sind beispielsweise vorstehende Zähne und/oder rückspringende Vertiefungen und/oder achsparallele über den Umfang verteilte Rillen und/oder Radiallöcher in der Mantelfläche 24.

Am Mantel 12 der Klappe 6 gibt es eine Einspritzöffnung 34. Die Einspritzöffnung 34 verläuft von der Oberfläche des Mantels 12 nach innen, bis die Einspritzöffnung 34 an der inneren Mantelfläche 24 austritt. Durch die Einspritzöffnung 34 kann das Füllmaterial 10 bzw. das Fixiermaterial 10 von außen in den Zwischenraum 22 zwischen der Klappenwelle 8 und der Klappe 6 eingespritzt werden. Das Füllmaterial 10 bzw. das Fixiermaterial 10 härtet einige Zeit nach seinem Einspritzen aus, so dass danach eine Relativbewegung zwischen der Klappe 6 und der Klappenwelle 8 nicht mehr möglich ist.

Die mindestens eine Unregelmäßigkeit 30 an der Umfangsfläche 28 der Klappenwelle 8 und die mindestens eine Unregelmäßigkeit 32 an der inneren Mantelfläche 24 des Mantels 12 der Klappe 6 sorgen für eine absolut feste, insbesondere absolut drehsichere Verbindung zwischen der Klappe 6 und der Klappenwelle 8. Wegen der mindestens einen Unregelmäßigkeit 30 an der Klappenwelle 8 ist es nicht unbedingt erforderlich, dass das Füllmaterial 10 bzw. das Fixiermaterial 10 an der Klappenwelle 8 haftet bzw. klebt. Wegen der mindestens einen Unregelmäßigkeit 32 an der Klappe 6 ist es nicht unbedingt erforderlich, dass das Füllmaterial 10 bzw. das Fixiermaterial 10 an der Klappe 6 haftet bzw. klebt. Deshalb können für die Klappe 6 und für die Klappenwelle 8 die am besten geeigneten Materialien verwendet werden, ohne dabei auf das Füllmaterial 10 bzw. das Fixiermaterial 10 Rücksicht nehmen zu müssen. Auch das Füllmaterial 10 bzw. das Fixiermaterial 10 kann gewählt werden, praktisch unabhängig davon, aus welchen Materialien die Klappe 6 und die Klappenwelle 8 bestehen.

Als Material für die Klappenwelle 8 können wahlweise Eisenmetalle, Nichteisenmetalle, Kunststoffe, wie z. B. Duroplaste oder Thermoplaste verwendet werden. Dasselbe gilt auch für die Klappe 6. Das Füllmaterial 10 bzw. das Fixiermaterial 10 kann ein Kunststoff, ein Elastomer, ein Kleber auf Kunststoffbasis, ein Kleber auf Metallbasis oder verflüssigtes Metall ähnlich einem Lot sein.

Für das Herstellen des Klappenstutzens 2 wird folgendes Vorgehen mit folgenden Arbeitsschritten vorgeschlagen:

Zunächst wird die Klappe 6 in den Gaskanal 18 gelegt. Dann wird die Klappenwelle 8 durch die im Klappengehäuse 4 vorhandenen, nicht dargestellten Lager und durch die in der Klappe 6 vorgesehene Aufnahmeöffnung 14 gesteckt. Anschließend wird die Klappe 6 exakt positioniert. Diese exakte Positionierung der Klappe 6 kann vorzugsweise dadurch geschehen, dass der Umfang 6a der Klappe 6 an der Innenwand 20 des Gaskanals 18 zur Anlage gebracht wird. Auch die Klappenwelle 8 wird in ihrer Schwenkrichtung betrachtet exakt positioniert. Auf der Klappenwelle 8 hat es außerhalb des Gaskanals 18 üblicherweise ein nicht dargestelltes Antriebsrad bzw. Zahnrad oder ein nicht dargestellter Hebel. Wegen den hohen Anforderungen an den Klappenstutzen 2 ist es meistens wichtig, dass dieses Rad oder dieser Hebel in Schwenkrichtung betrachtet relativ zu der Klappe 6 exakt positioniert ist.

Nachdem die Klappe 6 und die Klappenwelle 8 exakt positioniert worden sind, wird das Füllmaterial 10 über die Einspritzöffnung 34 in den Zwischenraum 22 zwischen der Klappenwelle 8 und dem Mantel 12 der Klappe 6 eingespritzt. Nach einiger Zeit, entweder durch chemische Reaktion und/oder infolge von Abkühlung, härtet das Füllmaterial 10 bzw. Fixiermaterial 10 aus. Aufgrund der Unregelmäßigkeiten 30 und 32 kann nach dem Aushärten des Füllmaterials 10 keine relative Drehbewegung mehr zwischen der Klappenwelle 8 und der Klappe 6 stattfinden. Das Füllmaterials 10 sorgt für eine einfach herstellbare, dauerhafte, exakte Positionierung zwischen dem Antriebsrad bzw. Zahnrad bzw. Hebel außerhalb des Gaskanals 18 und der Klappe 6 innerhalb des Gaskanals 18.

Durch entsprechende Dimensionierung des Drucks, mit dem das Füllmaterial 10 eingespitzt wird, kann auch ein Schrumpfen des Füllmaterials 10 ausgeglichen werden, so dass der Zwischenraum 22 von dem Füllmaterial 10 dauerhaft und nahezu vollständig ausgefüllt ist. Das ausgehärtete Füllmaterial 10 verschließt nebenbei auch die mindestens eine Einspritzöffnung 34.

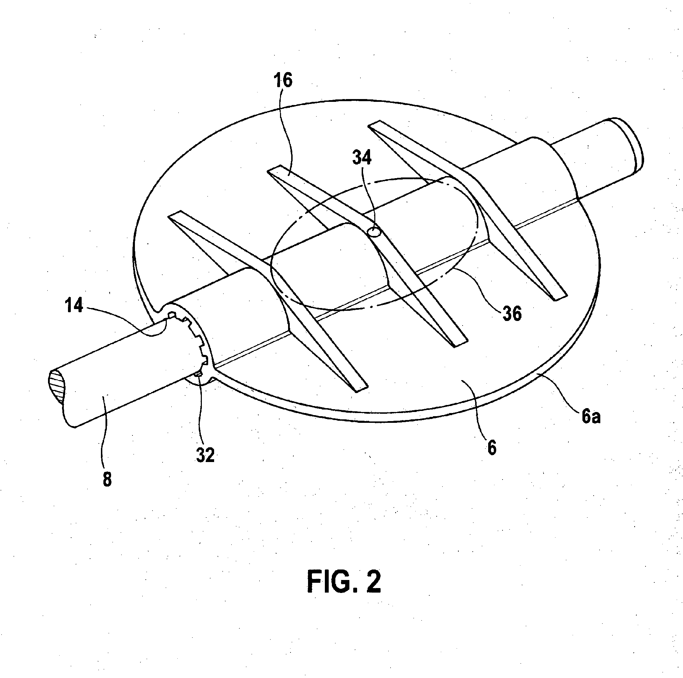

Die **Figur 2** zeigt eine Schrägansicht auf die Klappe 6 mit der durch die Aufnahmeöffnung 14 der Klappe 6 hindurchragenden Klappenwelle 8. Der Übersichtlichkeit wegen ist in der Figur 2 das Klappengehäuse 4 nicht dargestellt.

In allen Figuren sind gleiche oder gleich wirkenden Teile mit denselben Bezugszeichen versehen. Sofern nichts Gegenteiliges erwähnt bzw. in der Zeichnung dargestellt ist, gilt das anhand der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Die Einspritzöffnung 34 befindet sich ungefähr in der Mitte der Klappe 6. Nach dem Einspritzen des Füllmaterials 10 durch die Einspritzöffnung 34 verbreitet sich das Füllmaterial 10 in dem Zwischenraum 22. Der Bereich, in dem sich das Füllmaterial 10 ausbreitet, ist in der Figur 2 mit einem strichpunktierten Oval angedeutet. Durch das Füllmaterial 10 bzw. Fixiermaterial 10 entsteht zwischen der Klappe 6 und der Klappenwelle 8 ein Formschlussbereich 36. Das strichpunktiert angedeutete Oval soll den Formschlussbereich 36 grob markieren.

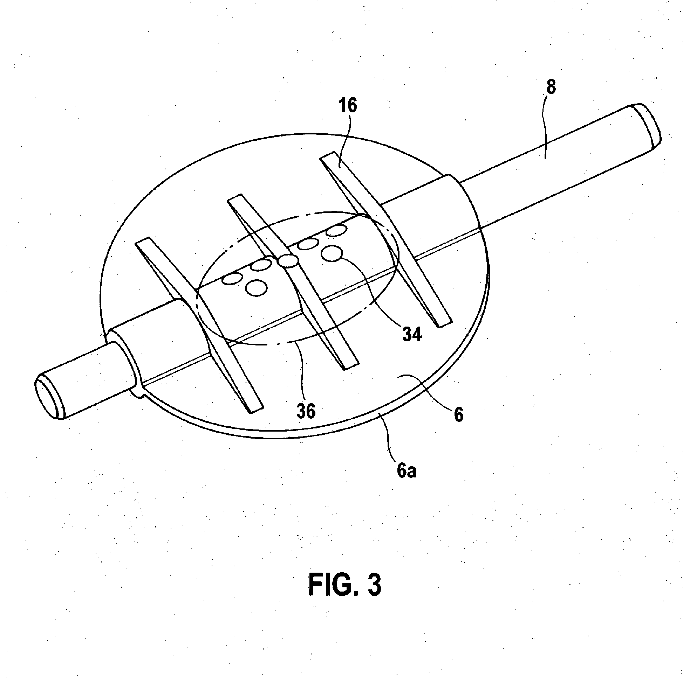

Die **Figur 3** zeigt ebenso wie die Figur 2 die Klappe 6 mit der Klappenwelle 8. Bei der in der Figur 3 dargestellten Ausführung hat es am Mantel 12 sieben Einspritzöffnungen 34. Es sei erwähnt, dass die Anzahl der Einspritzöffnungen 34 je nach Eigenschaft des verwendeten Füllmaterials 10 gewählt werden kann. Sind mehrere Einspritzöffnungen 34 vorgesehen, so kann über alle Einspritzöffnungen 34 gleichzeitig das Füllmaterial 10 eingespritzt werden, so dass auch bei einem schnell aushärtenden Füllmaterial 10 eine präzise Füllung des Zwischenraums 22 zwischen der Klappe 6 und der Klappenwelle 8 erreicht werden kann.

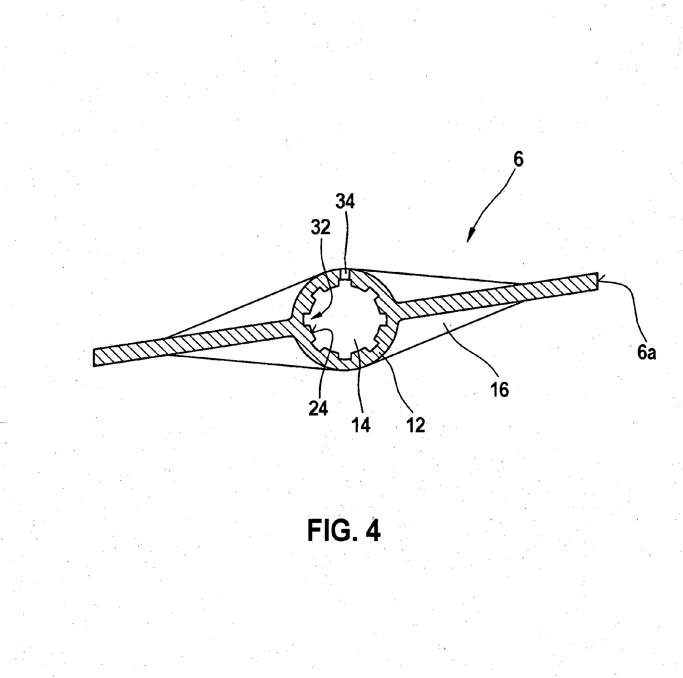

Die **Figur 4** zeigt die Klappe 6 als Einzelheit. Dargestellt ist ein Schnitt durch die Klappe 6 quer zum Mantel 12 und quer zur Aufnahmeöffnung 14. Hier sieht man deutlich die über den Umfang verteilten Unregelmäßigkeiten 32 an der der Klappenwelle 8 zugewandten Mantelfläche 24 des Mantels 12 der Klappe 6.

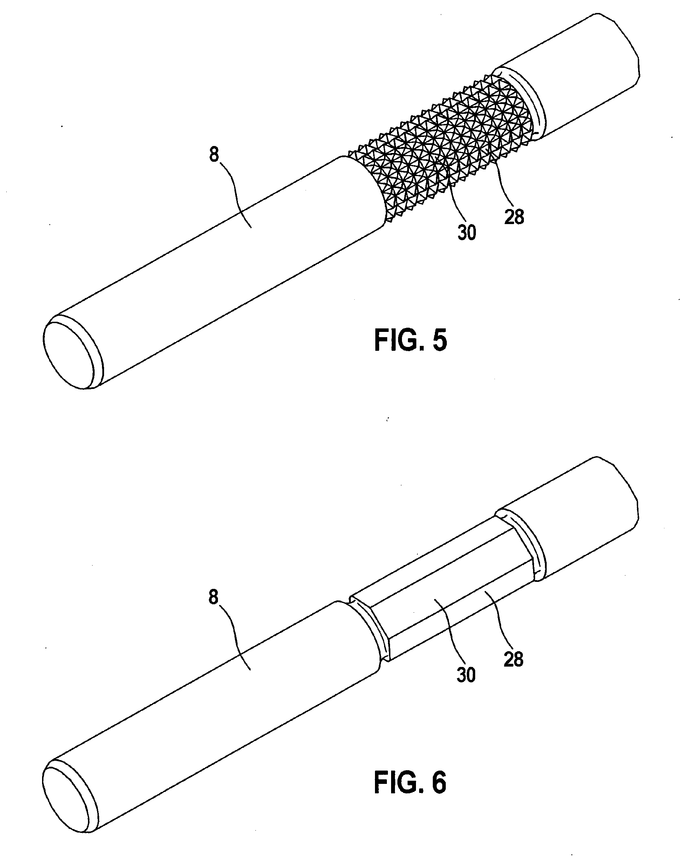

Die **Figuren 5 und 6** zeigen die Klappenwelle 8 als Einzelheit mit unterschiedlich gestalteten Umfangsflächen 28 mit den Unregelmäßigkeiten 30, an denen sich das Füllmaterial 10 nach dem Zusammenbauen verhaken kann. In der Figur 5 sind die Unregelmäßigkeiten 30 an der Umfangsfläche 28 in Form von angeprägten, prismatischen Zähnen ausgebildet. In der Figur 6 sind die Unregelmäßigkeiten 30, mit deren Hilfe das Füllmaterial 10 einen drehfesten Formschluss bildet, in Form von einem Mehrkant, wie z. B. einem Sechskant oder einem Achtkant, ausgebildet.

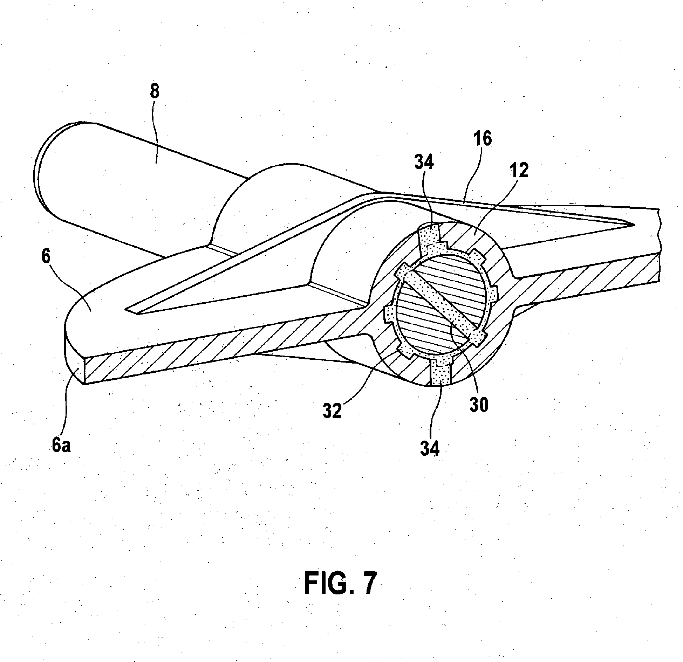

Die **Figur 7** zeigt einen Schnitt quer durch die Klappenwelle 8 und quer durch den Mantel 12 der Klappe 6. Die Figur 7 zeigt eine etwas abgewandelte Ausführung.

Bei der in der Figur 7 dargestellten Ausführung hat es von der Oberseite her und von der Unterseite her je mindestens eine Einspritzöffnung 34. Dadurch kann die Sicherheit, dass der Zwischenraum 22 von dem Füllmaterial 10 möglichst vollständig ausgefüllt wird, verbessert werden.

Bei der in der Figur 7 dargestellten Ausführung hat es im vorgesehenen Formschlussbereich 36 mindestens eine quer durch die Klappenwelle 8 verlaufende Bohrung. Beim Einspritzen des Füllmaterials 10 in den Zwischenraum 22 dringt das Füllmaterial 10 auch in diese Bohrung. Somit dient diese Bohrung als Unregelmäßigkeit 30 der Klappenwelle 8 um eine drehmomentfeste Verbindung zwischen der Klappenwelle 8 und der Klappe 6 zu erreichen.

Wie bereits anhand der Ausführungsbeispiele beschrieben, wird vorgeschlagen, zunächst die Klappenwelle 8 und die Klappe 6 zusammenzubauen, dann die Klappenwelle 8 und die Klappe 6 auszurichten und dann das Füllmaterial 10 einzubringen und zu warten bis das Füllmaterial 10 hart geworden ist. In einer alternativen Ausführung bzw. als alternative Vorgehensweise wird vorgeschlagen, das Füllmaterial 10 in Mikrokapseln zu verpacken. Bevor die Klappe 6 mit der Klappenwelle 8 zusammen gebaut wird, werden die Mikrokapseln an der Umfangsfläche 28 der Klappenwelle 8 und/oder an der Mantelfläche 24 der Klappe 6 angebracht. Beim Zusammenfügen der Klappenwelle 8 mit der Klappe 6 werden die Mikrokapseln gequetscht und dadurch zerstört. Dabei tritt das Füllmaterial 10 aus und füllt im Formschlussbereich 36 den Zwischenraum 22 zwischen der Klappe 6 und der Klappenwelle 8. Anschließend wartet man bis das Füllmaterial 10 hart geworden ist. Auch dabei muss die Aufnahmeöffnung 14, in der sich die Klappenwelle 8 befindet, ausreichend groß sein, damit der Zwischenraum 22 ausreichend groß ist um die Klappe 6 quer zur Schwenkachse relativ zur Klappenwelle 8 ausrichten zu können.

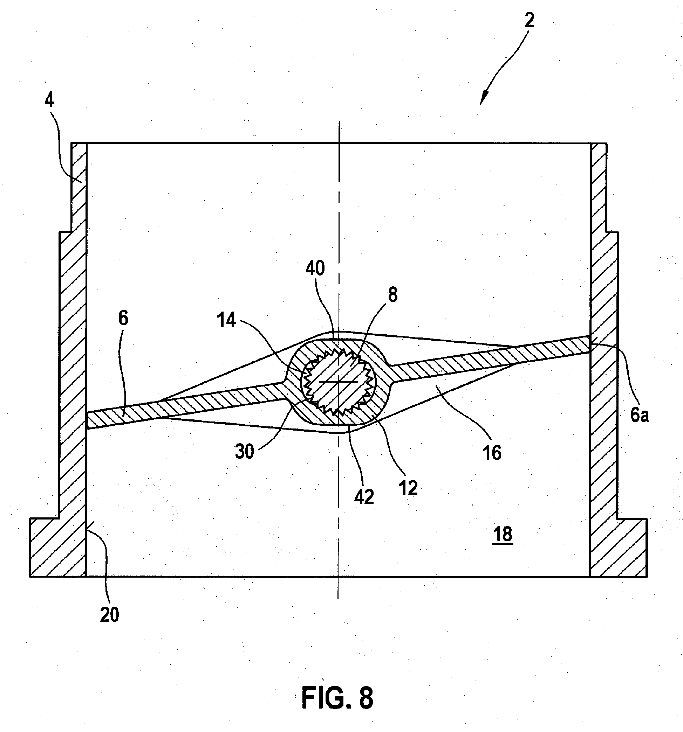

Die **Figur 8** zeigt ein weiteres Ausführungsbeispiel eines erfindungsgemäßen Klappenstutzens 2.

Bei der in der Figur 8 dargestellten Ausführung hat es am Mantel 12 der Klappe 6 mindestens eine eingedrückte Stelle 40. Es wird vorgeschlagen zusätzlich zur eingedrückten Stelle 40 eine weitere eingedrückte Stelle 42 bzw. mehrere eingedrückte Stellen vorzusehen.

Zum Herstellen des in der Figur 8 dargestellten Klappenstutzens 2 wird folgendes Vorgehen vorgeschlagen: Nach dem Einlegen der Klappe 6 in den Gaskanal 18 wird die Klappenwelle 8 in die nicht dargestellten Lager im Klappengehäuse 4 und in die Aufnahmeöffnung 14 der Klappe 6 eingebaut. Dann werden die Klappe 6 und die Klappenwelle 8 exakt positioniert, so dass die Klappe 6 auch relativ zur Klappenwelle 8 präzise positioniert ist. Nach dieser Positionierung wird von oben und von unten mit je einem Stempel auf den Umfang des Mantels 12 der Klappe 6 gedrückt, so dass sich der Mantel 6 an der gedrückten Stelle plastisch verformt. Durch diese plastische Verformung des Mantels 12 drückt sich die Mantelfläche 24 in die an der Klappenwelle 8 vorgesehenen Unregelmäßigkeiten 30 ein. Auf diese Weise erhält man eine drehmömentfeste, dauerhafte Fixierung zwischen der Klappe 6 und der Klappenwelle 8.

## Patentansprüche

1. Klappenstutzen zum Steuern einer Fluidströmung, mit einem Klappengehäuse (4), mit einem Gaskanal (18) in dem Klappengehäuse (4), mit einer in dem Klappengehäuse (4) schwenkbar gelagerten Klappenwelle (8) und mit einer mit der Klappenwelle (8) verbundenen Klappe (6), wobei die Klappenwelle (8) durch einen an der Klappe (6) vorgesehenen, die Klappenwelle (8) mindestens teilweise umgreifenden Mantel (12) hindurchführt, **dadurch gekennzeichnet, dass**
ein nach einem Zusammenbauen der Klappe (6) mit der Klappenwelle (8) zwischen die Klappe (6) und die Klappenwelle (8) eingebrachtes, sich verfestigendes Füllmaterial (10) für eine formschlüssige Verbindung zwischen der Klappe (6) und der Klappenwelle (8) sorgt.

2. Klappenstutzen nach Anspruch 1, **dadurch gekennzeichnet, dass**
zwischen der Klappenwelle (8) und dem Mantel (12) ein Zwischenraum (22) existiert, in dem sich das Füllmaterial (10) befindet.

3. Klappenstutzen nach Anspruch 1 oder 2, **dadurch gekennzeichnet, dass**
der Mantel (12) auf seiner dem Füllmaterial (10) zugewandten Mantelfläche (24) mindestens eine Unregelmäßigkeit (30) aufweist.

4. Klappenstutzen nach einem der vorhergehenden Ansprüche, **dadurch gekennzeichnet, dass** die Klappenwelle (8) mindestens eine dem Füllmaterial (10) zugewandte Unregelmäßigkeit (32) aufweist.

5. Klappenstutzen nach einem der Ansprüche 1 bis 4, **dadurch gekennzeichnet, dass** ein Teil des Füllmaterials (10) vor einem Zusammenbauen der Klappe (6) mit der Klappenwelle (8) an der Klappe (6) und/oder an der Klappenwelle (8) angebracht worden ist.

6. Verfahren zum Herstellen eines zum Steuern einer Fluidströmung dienenden Klappenstutzens, mit einem Klappengehäuse (4), mit einem Gaskanal (18) in dem Klappengehäuse (4), mit einer in dem Klappengehäuse (4) gelagerten Klappenwelle (8), und mit einer mit der Klappenwelle (8) verbundenen Klappe (6), wobei die Klappenwelle (8) durch einen an der Klappe (6) vorgesehenen, die Klappenwelle (8) mindestens teilweise umgreifenden Mantel (12) hindurchführt, **dadurch gekennzeichnet, dass** ein nach einem Zusammenbauen der Klappe (6) mit der Klappenwelle (8) zwischen die Klappenwelle (8) und die Klappe (6) eingebrachtes Füllmaterial (10) sich nach dem Zusammenbauen der Klappe (6) mit der Klappenwelle (8) verfestigt.

## Claims

1. Throttle body for controlling a fluid flow, having a valve housing (4), having a gas duct (18) in the valve housing (4), having a flap shaft (8) which is mounted pivotably in the valve housing (4), and having a flap (6) which is connected to the flap shaft (8), the flap shaft (8) leading through a casing (12) which is provided on the flap (6) and engages at least partially around the flap shaft (8), **characterized in that** a solidifying filling material (10) which is introduced between the flap (6) and the flap shaft (8) after assembly of the flap (6) with the flap shaft (8) ensures a positively locking connection between the flap (6) and the flap shaft (8).

2. Throttle body according to Claim 1, **characterized in that** an intermediate space (22), in which the filling material (10) is situated, exists between the flap shaft (8) and the casing (12).

3. Throttle body according to Claim 1 or 2, **characterized in that** the casing (12) has at least one irregularity (30) on its casing face (24) which faces the filling material (10).

4. Throttle body according to one of the preceding claims, **characterized in that** the flap shaft (8) has at least one irregularity (32) which faces the filling material (10).

5. Throttle body according to one of Claims 1 to 4, **characterized in that** part of the filling material (10) has been attached to the flap (6) and/or to the flap shaft (8) before assembly of the flap (6) with the flap shaft (8).

6. Method for producing a throttle body which serves to control a fluid flow, having a flap housing (4), having a gas duct (18) in the flap housing (4), having a flap shaft (8) which is mounted in the flap housing (4), and having a flap (6) which is connected to the flap shaft (8), the flap shaft (8) leading through a casing (12) which is provided on the flap (6) and engages at least partially around the flap shaft (8), **characterized in that** a filling material (10) which is introduced between the flap shaft (8) and the flap (6) after assembly of the flap (6) with the flap shaft (8) solidifies after assembly of the flap (6) with the flap shaft (8).

## Revendications

1. Porte-clapet pour commander un écoulement fluidique, comprenant un boîtier de clapet (4), un canal de gaz (18) dans le boîtier de clapet (4), un arbre de clapet (8) supporté de manière pivotante dans le boîtier de clapet (4) et un clapet (6) connecté à l'arbre de clapet (8), l'arbre de clapet (8) étant guidé à travers une enveloppe (12) prévue au niveau du clapet (6), venant en prise au moins en partie autour de l'arbre de clapet (8), **caractérisé en ce qu'**un matériau de remplissage (10) se solidifiant, introduit entre le clapet (6) et l'arbre de clapet (8) après un assemblage du clapet (6) avec l'arbre de clapet (8), assure une liaison par engagement par correspondance géométrique entre le clapet (6) et l'arbre de clapet (8).

2. Porte-clapet selon la revendication 1, **caractérisé en ce qu'**entre l'arbre de clapet (8) et l'enveloppe (12) existe un espace intermédiaire (22) dans lequel se trouve le matériau de remplissage (10).

3. Porte-clapet selon la revendication 1 ou 2, **caractérisé en ce que** l'enveloppe (12) présente au moins une irrégularité (30) sur sa surface d'enveloppe (24) tournée vers le matériau de remplissage (10).

4. Porte-clapet selon l'une quelconque des revendications précédentes, **caractérisé en ce que** l'arbre de clapet (8) présente au moins une irrégularité (32) tourné vers le matériau de remplissage (10).

5. Porte-clapet selon l'une quelconque des revendications 1 à 4, **caractérisé en ce qu'**une partie du matériau de remplissage (10), avant un assemblage du clapet (6) avec l'arbre de clapet (8), a été montée sur le clapet (6) et/ou sur l'arbre de clapet (8).

6. Procédé de fabrication d'un porte-clapet servant à commander un écoulement fluidique, comprenant un boîtier de clapet (4), un canal de gaz (18) dans le boîtier de clapet (4), un arbre de clapet (8) supporté dans le boîtier de clapet (4), et un clapet (6) connecté à l'arbre de clapet (8), l'arbre de clapet (8) étant guidé à travers une enveloppe (12) prévue au niveau du clapet (6), venant en prise au moins en partie autour de l'arbre de clapet (8), **caractérisé en ce qu'**un matériau de remplissage (10) introduit après l'assemblage du clapet (6) avec l'arbre de clapet (8) entre l'arbre de clapet (8) et le clapet (6) se solidifie après l'assemblage du clapet (6) avec l'arbre de clapet (8).
